# EUROPEAN PATENT SPECIFICATION

(11) **EP 1 392 762 B1**
(45) Date of publication and mention of the grant of the patent: **07.03.2012**
(21) Application number: 02736821.6
(22) Date of filing: 13.05.2002
(51) Int. Cl.: C08J 3/12, C08J 3/20, C08K 3/34, C08K 9/06

(54) **INTEGRATED PROCESS FOR PREPARING A SILICONE RUBBER COMPOSITION**
IINTEGRIERTES VERFAHREN ZUR HERSTELLUNG EINER SILIKONEKAUTSCHUKZUSAMMENSETZUNG
PROCEDE INTEGRE RELATIF A L'ELABORATION D'UNE COMPOSITION DE CAOUTCHOUC DE SILICONE

(30) Priority: 25.05.2001 US 864635
(43) Date of publication of application: 03.03.2004
(73) Proprietor: Dow Corning Corporation, Midland, MI 48686-0994 (US)
(72) Inventor: GELDERBLOOM, Susan, Jane, Midland, MI 48640 (US); BIXLER, Robert, Lewis, Jr., Midland, MI 48642 (US)
(74) Representative: Donlan, Andrew Michael
(86) International application number: PCT/US2002/015227
(87) International publication number: WO 2002/096981

(56) References cited:
- EP-A- 0 542 472
- EP-A- 0 783 021
- US-A- 5 167 274
- US-A- 5 198 171

## Description

The present invention is an integrated process for producing catalyst containing silicone rubber compositions with substantially reduced processing time and labour input compared to standard methods for producing such compositions.

In the past to prepare, for example, peroxide curing silicone rubber compositions it was common to prepare a polydiorganosiloxane gum having a viscosity of from 1 x 10⁶ to 2 x 10⁸ mPa·s at 25°C which was the basic ingredient of the peroxide curing silicone rubber composition. The gum was then transported to a dough-mixer. Then, there was added to the gum in the dough-mixer the requisite amount of reinforcing fillers or extending fillers, heat stabilizers, flame retardant additives, processing aids, and other types of ingredients that are normally associated or present in peroxide curing silicone rubber compositions.

The dough-mixer comprises a large tank with two large mixing blades therein which agitate and mix the gum and the other ingredients into a uniform mixture. Normally, it takes a dough-mixer from a minimum of 3 hours to a maximum of 48 hours to form a uniform homogeneous mass of the diorganopolysiloxane gum, filler, and other ingredients. After the dough mixing is completed the composition is cooled for several hours either in the dough-mixer or after removing from the dough-mixer. The resulting mass is then dumped into a cart, cut into pieces, and passed through an extruder to screen out particles and is then formed into packageable slabs, for example 50 pound (22.7kg) slabs. The resulting slabs are then packaged and shipped, or they may be processed through other extruding and forming machines before they are shipped. In addition, in some cases, the 50 pound (22.7kg) slabs are processed on a mill at which point a curing catalyst may be added and the resulting milled mass may then be extruded into the desired shape and shipped as such. Alternatively, the uncatalyzed mass may be shipped to the customer for subsequent addition of the catalyst.

The above described method is both time consuming and labour intensive and requires multiple manual handling of the silicone rubber compositions during compounding and forming into a shippable form. The present process significantly shortens the time required to form the catalyst curable silicone rubber compositions and eliminates the manual handling of the silicone rubber compositions during compounding and forming into a shippable product. This reduction in time and elimination of manual handling is achieved by an integrated process comprising first forming a free-flowing particulate polymer mixture comprising *in situ* treated fumed silica and a high consistency polydiorganosiloxane, rapidly cooling the free-flowing powder by means of a bulk solids cooling apparatus, and then extruding the cooled free-flowing powder to effect massing, screening, and shaping of the silicone rubber composition into a form suitable for its intended use. The catalyst may be added to the silicone rubber composition at any stage after the cooling step, that is to the free-flowing powder, during the massing of the free-flowing powder, or as a separate mixing step, by for example, an in-line distributive mixer attached to the exit of the extruder.

Link et al., U.S. Pat. No. 3,824,208, teach a process for producing a free-flowing particulate polymer mixture comprising a filler and a polymer having a viscosity from 1 x 10³ to 2 x 10⁸ centipoise at 25°C.

Bilgrien et al., U.S. Pat. No. 5,153,238, teach storage stable and gel-free organosiloxane compositions in the form of flowable powders prepared by blending a high consistency polydiorganosiloxane into a quantity of fluidized reinforcing filler that is heated to a temperature of from 100°C to 200°C prior to or immediately following introduction of the polydiorganosiloxane. The silica filler is typically treated with an anti-creping agent either prior to or during this blending process. The resultant mixture is heated while being subjected to shearing forces that reduce its average particle size to achieve a flowable powder.

Mueller, U.S. Pat. No. 5,167,274, teaches a bulk solid cooling apparatus suitable for cooling free-flowing solid particulates.

Saxton, U.S. Pat. No. 3,006,029; Gale, U.S. Pat. No. 4,419,014; and Fukumizu et al., U.S. Pat. No. 4,695,165; all described mixing/extruding devices which may have use in the present integrated process.

However, the present invention is directed to an integrated process for producing catalyst containing silicone rubber compositions with substantially reduced processing time and labour input compared to standard methods for producing such compositions.

In a first embodiment of the invention there is provided an integrated process for compounding a catalyst containing silicone rubber composition comprising the steps of
A) blending a composition comprising:
   i) 100 parts by weight of a high consistency polydiorganosiloxane,
   ii) about 10 to 80 parts by weight of a treated or untreated reinforcing silica filler,
      and when said reinforcing filler is untreated
   iii) about 10 to 45 weight percent, based on the weight of the reinforcing silica filler, of a treating agent for the reinforcing silica filler
      by introducing the filler into a mixer and maintaining said filler in a highly turbulent, fluidized state at a temperature of from 80°C to about 350°C, maintaining the temperature and the filler in the highly turbulent fluidized state while introducing the polydiorganosiloxane and subjecting the resulting mixture to a shearing force sufficient to achieve an average particle size of from 1 to 1000 microns thereby forming a flowable organopolysiloxane powder composition, and when required, introducing said treating agent into the mixer prior to, during, or after addition of the polydiorganosiloxane,
B) directly transferring the flowable organopolysiloxane powder composition to a bulk solids cooling device and facilitating accelerated bulk cooling thereof composition to a temperature below the decomposition and/or activation temperature of a catalyst added in step (D),
C) feeding the bulk cooled flowable organopolysiloxane powder composition to a massing apparatus and massing the organopolysiloxane composition therein at a temperature below the decomposition and/or activation temperature of a catalyst added in step (D),
D) adding a catalytic amount of a catalyst to the organopolysiloxane composition either prior to, during, or after step (C) at a temperature below the decomposition and/or activation temperature of the catalyst.

It is to be understood that a massing step as referred to in the present invention comprises the conversion of a divided solid or powder into a single piece, or mass, by compression and mastication/kneading.

The resulting composition may then be recovered as a catalyst containing silicone rubber composition mass by any appropriate means. The present process is an integrated process. By "integrated" it is meant that after the batch formation of the powdered organopolysiloxane composition in step (A) subsequent steps are conducted in a continuous mode without manual handling of the organopolysiloxane composition until after massing and preferably after addition of a catalyst and massing.

Step (A) of the present process is conducted by adding at least a portion of the reinforcing silica filler to a high shear mixer and maintaining the filler in a highly turbulent fluidized state at a temperature of from 80°C to about 350°C. It is important that the temperature of the fluidized silica be maintained at a temperature of 80°C or greater during conduct of step (A) both to facilitate treatment of the filler with the treating agent and to reduce the formation of gels. Preferred is when the temperature within the mixer is maintained within a range of from about 90°C to 180°C.

Any mixing apparatus capable of maintaining the reinforcing filler in a fluidized state while blending the filler with the high consistency polydiorganosiloxane and applying sufficient shear to reduce the size of the resultant filler-coated polymer particles to a uniform powder may be used. Suitable mixers include but are not limited to Waring^{®} blenders containing a high speed shearing blade at the bottom of a vertically oriented conical chamber, mixers manufactured by Rheinstahl Henschel AG, Kassel, Germany, and mixer/granulators manufactured by Littleford Bros. Inc. Florence KY. Preferred mixers for use in the present process are the mixer/granulators manufactured by Littleford Bros. Inc. Such mixers and their use to form powdered silicone compositions are described, for example, in Link et al., U.S. Pat. No. 3,824,208 and Bilgrien et al., U.S. Pat. No. 5,153,238. These mixers are referred to as "plough" or "ploughshare" mixers due to the presence of at least one triangular or "T" shaped "plough" blade located in a horizontally oriented cylindrical mixing chamber. The plough blade rotates on the horizontal axis of the chamber with the edge of the blade close to the perimeter of the chamber. In addition to maintaining the silica in a fluidized state and uniformly dispersing the polymer particles throughout the silica to achieve a homogeneous blend, the plough blade is also believed to agglomerate the particles produced by the high speed shearing blade(s), also referred to as chopper blades, present in the chamber to achieve the desired final particle size.

The speed of the plough blade required to maintain the silica in a fluidized form is typically from about 30 to about 200 revolutions per minute (rpm) and is dependent upon the capacity of the mixing chamber and the particle size range desired for the final powder. A speed of from 80 to 180 rpm is preferred using a 130 litre capacity mixing chamber. The speed would be proportionately slower for a larger capacity mixer.

The mixing chamber also contains at least one high speed chopping blade to provide the shearing force required to reduce the particle size of the polydiorganosiloxane to a fine powder. A preferred embodiment of a mixing chamber contains at least one conical array of 5 blades rotating on a single shaft, said blades ranging in diameter from 15 to 23 cm, the smallest diameter blade being located closest to the mixer wall.

It is believed that the speed of the chopping blade(s) should be from about 2000 to about 4000 rpm to prepare the powdered silicone rubber composition of step (A), with a processing time of up to 30 minutes. The processing time period will vary depending upon the radius of the blade(s) and the volume of material in the mixer. Smaller diameter blades typically must rotate at a higher speed to impart the same level of shear to the present mixture. To minimize processing time it is preferable to use the longest chopper blades that will not interfere with rotation of the plough blades located on either side of the chopper blades

In a preferred embodiment of the present process, to reduce the capacity of the mixing chamber required to prepare a given amount of the blend, only a portion of the filler is added initially, due to the large increase in filler volume during fluidisation. This volume decreases substantially as the silica densifies and coats the polydiorganosiloxane in the mixing chamber. The remaining filler is initially placed in a hopper or other suitable dispensing container and allowed to drop into the chamber as the volume of silica initially present in the mixer decreases due to coating of polydiorganosiloxane particles.

The high consistency polydiorganosiloxane is added to the mixer after at least a portion of the reinforcing silica filler has been added to the mixer and fluidized and the required temperature of the fluidized silica has been established. The initial size of the high consistency polydiorganosiloxane added to the mixer is not critical, and may range from a finely divided powder to the largest size pieces that may be conveniently fed to and will fit in the mixing chamber of the mixer. In a preferred process, the high consistency polydiorganosiloxane is added to the mixer as a single shot of one or more masses weighing up to about 100 kg each. The initial size of particles or a larger mass of polydiorganosiloxane added to the mixer is rapidly reduced by the shearing action of the mixer, which in the case of the Littleford-type mixer is provided by the chopper blades. Blending of the reinforcing silica filler with the high consistency polydiorganosiloxane is continued until the shearing force is sufficient to achieve an average particle size of from about 1 to 1000 microns thereby forming an organopolysiloxane composition in the form of a flowable powder. The length of time required to achieve such a particle size may vary from about 2 minutes to about 50 minute after addition of the polydiorganosiloxane, depending at least in part on the capacity of the mixer chamber and the shear force provided by the mixer.

In the preferred process using a Littleford-type mixer the reduction and subsequent increase in the particle size of the polydiorganosiloxane that occurs during step (A) may be monitored by plotting the amount of electrical power consumed by the motor(s) driving the chopper blades as a function of time. This method of assessing the particle size of the polydiorganosiloxane is described in Bilgrien et al., U.S. 5,153,238.

In step (A) after the reinforcing silica filler is fluidized and the required temperature established the treating agent may be added prior to, during, or after addition of the polydiorganosiloxane. Preferred is when the treating agent is added during blending of the polydiorganosiloxane with the fluidized reinforcing silica filler.

In the present integrated process when the desired particle size has been achieved, as indicated from the power consumption curve or by visual examination of the product, the powdered organopolysiloxane composition at a temperature of 80°C or higher is directly transferred to a bulk solids cooling device to facilitate accelerated cooling of the powdered organopolysiloxane composition to a temperature below the decomposition and/or activation of a subsequently to be added catalyst. The bulk solids cooling device may be any of those known in the art capable of facilitating the cooling of the powdered organopolysiloxane composition. The term "facilitate" is used to distinguish step B of process according to the present invention from those situations where the bulk polydiorganosiloxane powder is allowed to cool relatively undisturbed under ambient conditions. Typically, although the powdered organopolysiloxane composition is free-flowing at this point it is somewhat sticky and easily massed if significant compaction occurs. Therefore, in choosing a bulk cooling device to facilitate cooling of the powdered organopolysiloxane compositions it is important to consider these characteristics of the powder. Suitable bulk cooling devices include, for example, belt coolers, jacketed mixers such as the above described Littleford-type mixer, fluidized mixers through which cooling air may be blown, and flow-through apparatus having one or more cooling elements positioned therein. A preferred bulk solids cooling device is that described in Mueller, U. S. Pat. 5,167,274.

Optionally, a means adapted to eliminate or reduce lumps, large particles, agglomerates which could clog or otherwise compromise the capacity of the bulk solids cooling device may be positioned in the flow path between the mixer of step (A) and the bulk solids cooling device. Said means may be of any appropriate design, for example a powder mill, chopper or the like. One example of such a means useful in the present process is described in Lynch et al, U.S. Pat. No. 4,768,722.

After the polydiorganosiloxane powder has been cooled to a temperature below the decomposition and/or activation temperature of the catalyst to be added in subsequent steps, the powder is fed directly to a massing apparatus suitable for forming the powder into a coherent mass. Preferably the massing apparatus is a single or twin screw extruder capable of massing the powdered polydiorganosiloxane composition without generating significant heat may be used. Most preferred are those single screw extruders typically referred to as "cold feed" silicone rubber extruders such as manufactured by National Feed Screw (Massilon, OH) and Davis Standard (Mystic, CT). In a preferred process the exit end of such an extruder is fitted with a screen to strain out particulates that may be present in the massed silicone rubber composition.

The catalyst may be added to the process anytime after the cooling of step (B); that is, after step (B) and before step (C), during step (C), or after step (C). The catalyst may be proportioned between two or more of the above described addition points. Because the preferred extruders for use in step (C) typically have poor mixing capabilities, it is preferred that the catalyst be added in a mixing step conducted after step (C). In the preferred integrated process, a mixing device is coupled directly to the exit end of the barrel of the extruder of step (C). Any low temperature distributive-type mixing devices known in the art may be used for this mixing step. Such mixing devices are described, for example, in MIXING IN POLYMER PROCESSING, Ed. By Rauwendaal, Marcel-Dekker, Inc., NY, 1991, pp. 164-187, in Gale U.S. Pat. No. 4,419,014, and in Saxton U.S. Pat. No. 3,006,029. A preferred mixer for use in the present process is a cavity transfer type mixer as described in the above citations. In the preferred process the catalysed silicone rubber composition is shaped into a suitable form for shipping and handling by means of a die positioned at the exit end of the extruder or when a separate mixer is used at the exit end of the mixer.

A catalyst containing silicone rubber composition mass is obtained from the present process. In the preferred process the massed silicone rubber composition is extruded from the mixer into a size and configuration suitable for further processing in moulding and extruding applications. The final size and configuration of the material produced by the present process is not critical and will be generally dictated by the requirements of the final use of the composition.

Step (A) of the present process involves adding about 10 to 80 parts by weight of a reinforcing silica filler for each 100 parts by weight of the high consistency polydiorganosiloxane. Such reinforcing silica fillers are well known in the art and may be any of those finely divided silicas having a surface area greater than about 50 m²/g and include fumed silica, precipitated silica, and silica gels. The preferred silica is a fumed silica having a surface area within a range of from about 75 m²/g to 1000 m²/g. Preferred is when about 20 to 50 parts by weight of the reinforcing silica filler per 100 parts by weight of the high consistency polydiorganosiloxane is added to the present process in step (A). Preferably the reinforcing silica filler is introduced into the mixer in an untreated form but it may alternatively have been pretreated using treating agents as described below prior to introduction into the mixer.

Preferably the high consistency polydiorganosiloxane, which is the major component of the silicone rubber composition formed by the present process has a viscosity in a range of from about 6 x 10⁴ to 1 x 10⁸ mPa·s at 25°C. More preferably the high consistency polydiorganosiloxane has a viscosity in a range of from about 1 x 10⁶ to 1 x 10⁷ mPa·s at 25°C.

The high consistency polydiorganosiloxane may be represented by the general formula R³(R¹R²SiO)ₙR³ where R¹, R², and R³ are each independently selected monovalent substituted or unsubstituted hydrocarbon groups and n, the average number of repeating units in the polymer, is selected to provide a viscosity within the ranges described above. The monovalent hydrocarbon groups represented by R¹, R², and R³ include alkyl and substituted alkyl groups containing from 1 to about 20 carbon atoms, alkenyl groups such as vinyl and 5-hexenyl, cycloalkyl groups such as cyclopentyl and cyclohexyl, and aromatic hydrocarbon groups such as phenyl, benzyl and tolyl. R¹, R², and R³ may be independently substituted with, for example, substituents such as halogens, alkoxy groups, and cyano groups. Preferred monovalent hydrocarbon radicals are selected from the group consisting of alkyl groups comprising 1 to about 4 carbon atoms, alkenyl, phenyl, and 3,3,3-trifluoropropyl. Most preferably each R¹ is independently selected from the group consisting of methyl and alkenyl groups comprising 1 to 5 carbon atoms, R² is methyl, and R³ is selected from the group consisting of methyl and alkenyl groups comprising 1 to 5 carbon atoms. The high consistency polydiorganosiloxane may be a homopolymer, a copolymer or a mixture containing two or more different homopolymers and/or copolymers. The high consistency polydiorganosiloxane may be, for example, trimethylsiloxy end-capped polydimethylsiloxane, vinyldimethylsiloxy end-capped polydimethylsiloxane, vinyldimethylsiloxy end-capped polydimethyl/vinylmethylsiloxane copolymer, and trimethylsiloxy end-capped polydimethyl/vinylmethylsiloxane copolymer.

Providing the reinforcing silica filler has not been pretreated, step (A) also requires the addition of a treating agent for the reinforcing silica filler. The treating agent may be any of those typically used to treat reinforcing silica fillers to make them more hydrophobic and to reduce or prevent a phenomena typically referred to as "creping" or "crepe hardening" that often occurs when mixture of such fillers and polydiorganosiloxanes are stored for any appreciable period of time. Creping is characterized by a gradual increase in the viscosity or decrease in the plasticity of such polydiorganosiloxane compositions. Although such crepe hardening may often be reversed by subjecting the composition to shearing forces using a rubber mill or sigma blade mixer, this adds an additional process step in the use of the composition and such step is preferably avoided.

Compounds which may be used as treating agents for the reinforcing silica fillers include, for example, liquid low-molecular weight silanol or alkoxy-terminated polydiorganosiloxanes, hexaorganodisiloxanes, hexaorganodisilazanes, cyclic diorganosiloxanes, and partial hydrolyzates of such compounds. Preferred treating agents for use in the present process are a low molecular weight hydroxy end-blocked polydimethylsiloxane fluid or a reaction product of a low molecular weight (LMW) hydroxy end-blocked polydimethylsiloxane fluid and/or a LMW hydroxy end-blocked phenylmethylsiloxane fluid and/or a LMW hydroxy end-blocked methylvinylsiloxane fluid which reaction may be catalysed using ammonium hydroxide or ammonium carbonate.

The treating agent may be utilized in any appropriate amount that reduces or prevents crepe hardening of the silicone rubber composition prepared by the present method. Generally, a useful amount of treating agent is about 10 to 45 weight percent based on the weight of the reinforcing silica filler. Preferred is when about 15 to 35 weight percent of the treating agent is added in step (A) of the present process, based on the weight of the reinforcing silica filler.

In addition to the above described components (A)(i-iii), optional components may be added during step (A) depending upon the properties desired in the cured silicone elastomer prepared from the process. Such optional components include extending fillers such as treated and/or untreated quartz, calcium carbonate, hydrated alumina and diatomaceous earth; pigments such as iron oxide and titanium oxide; electrically conducting fillers such as carbon black and finely divided metals; heat stabilizers such as hydrated cerric oxide; flame retardants such as antimony compounds, hydrated aluminium oxide, magnesium compounds and halogenated hydrocarbons; adhesion promoters; internal mould release agents such as zinc stearate and resinous organosiloxane copolymers as reinforcing agents. The treated extending fillers are typically treated with the agents described for the treatment of the reinforcing fillers.

The catalyst added to the present process is preferably either an organoperoxide type catalyst or a hydrosilylation catalyst, but is most preferably an organoperoxide catalyst.

Any suitable organoperoxide which is effective as a catalyst for the curing of silicone compositions may be used. The organoperoxide catalyst may be vinyl specific and require the presence of vinyl or other alkenyl groups substituted on the polydiorganosiloxane polymers. The organoperoxide may be non-vinyl specific, and react with hydrocarbon groups bonded to silicon atoms of the high consistency polydiorganosiloxane to generate a free radical at which cross-linking may be effected. The organoperoxide catalyst may include di-tertiary butyl peroxide, tertiary-butyl-triethylmethyl peroxide, tertiary-butyl-tertiary-butyl-tertiary-triphenyl peroxide, t-butyl perbenzoate and di-tertiary alkyl peroxides such as dicumyl peroxide and 2,5-bis(tert-butyl peroxy)-2,5-dimethylhexane. Other suitable peroxide catalyst which effect curing through saturated as well as unsaturated hydrocarbon groups on the siloxane chains are aryl peroxides such as tertiary-butyl perbenzoate, chloroalkyl peroxides such as 1,3-dichlorobenzoyl peroxide, 2,4-dichlorobenzoyl peroxide, monochlorobenzoyl peroxide, benzoyl peroxide, bis(ortho-methylbenzoyl) peroxide, bis(meta-methylbenzoyl) peroxide, bis(para-methylbenzoyl) peroxide, or a similar monomethylbenzoyl peroxide, bis(2,4-dimethylbenzoyl) peroxide, or a similar dimethylbenzoyl peroxide, bis(2,4,6-trimethylbenzoyl) peroxide, or a similar trimethylbenzoyl peroxide. A preferred organoperoxide catalyst is selected from the group consisting of 2,4-dichlorobenzoyl peroxide and 2,5-bis(tertiarybutyl peroxy)-2,5-dimethyl hexane.

In the case of an organoperoxide catalyst, the catalytic amount of the organoperoxide catalyst is that sufficient to effect cure of the organopolysiloxane composition when heated above the decomposition temperature of the organoperoxide. Generally, about 0.1 to 10 weight percent of the organoperoxide may be added to the organopolysiloxane composition, based upon the weight of the organopolysiloxane composition.

Alternatively, providing the high consistency polydiorganosiloxane contains two or more alkenyl groups per molecule, for example, vinyl groups, curing of the composition made in accordance with the process of the invention may be carried out via an addition curing reaction using a catalyst comprising a platinum catalyst in combination with a polyorganosiloxane having at least two silicon-bonded hydrogen atoms per molecule. The platinum catalyst may be exemplified by the following: a fine-powdered platinum, chloroplatinic acid, alcohol-modified products of chloroplatinic acid, platinum chelates, a complex of platinum and diketone, coordination compounds of a chloroplatinic acid and olefins, a complex of a chloroplatinic acid and an alkenylsiloxane, The platinum catalysts may optionally be on an appropriate carrier such as alumina, silica, carbon black or may be encapsulated within at least one layer of a thermoplastic polymer selected from the group consisting of organic polymers and polyorganosiloxanes. The most preferred platinum catalyst is a complex of a chloroplatinic acid and an alkenyl siloxane having a very high catalytic activity in a hydrosilylation reaction such as the platinum-alkenylsiloxane complex disclosed US 3419593 or a spherical fine-powdered catalyst composed of a thermoplastic resin that contains more than 0.01 wt.% of metal platinum atoms. The platinum catalyst is preferably used in an amount of 0.01 to 500 and more preferably 0.1 to 100 parts by weight based on 10⁶ parts by weight of the component A.

Polyorganosiloxanes having at least two silicon-bonded hydrogen atoms per molecule may be exemplified by the following compounds: trimethylsiloxy terminated polymethylhydrogensiloxane, a trimethylsiloxy terminated copolymer of methylhydrogensiloxane and dimethylsiloxane, a copolymer of a dimethylhydrogensiloxy terminated methylhydrogensiloxane and dimethylsiloxane, a copolymer of a methylhydrogensiloxane and a cyclic dimethylsiloxane, an organopolysiloxane composed of siloxane units expressed by the formula (CH₃)₃HSiO_{1/2}, together with siloxane units of the formula SiO_{4/2} or CH₃SiO_{3/2} and optionally units of the formula (CH₃)₂SiO_{2/2;} a dimethylhydrogensiloxy terminated polydiorganosiloxane, a dimethylhydrogensiloxy terminated copolymer of methylphenylsiloxane and a dimethylsiloxane, a dimethylhydrogensiloxy terminated copolymer of methyl (3,3,3-trifluoropropyl) siloxane and dimethylsiloxane, or combinations of two or more of the above. It is preferred that the viscosity of the polyorganosiloxane having at least two silicon-bonded hydrogen atoms per molecule at 25°C is within a range of 2 to 100,000 mPa·s. Preferably the polyorganosiloxane having at least two silicon-bonded hydrogen atoms per molecule is added in amount such that the ratio of the total mole number of silicon-bonded hydrogen atoms to the total mole number of alkenyl groups in the component A is in the range of from 0.5:1 to 20:1. The polyorganosiloxanes having at least two silicon-bonded hydrogen atoms per molecule may be introduced into the composition during step A prior to, during, or after addition of the polydiorganosiloxane, or any time after the completion of step B.

In the case where the catalyst is a platinum catalyst the composition preferably also includes one or more cure retarders which are preferably introduced into the composition before and/or simultaneously with the addition of the platinum catalyst. Examples of suitable cure retarders include alkyne alcohols such as 3-methyl-1-butyn-3-ol, 3,5-dimethyl-1-hexyn-3-ol, and 3-phenyl-1-butyn-3-ol; ene-yne compounds such as 3-methyl-3-penten-1-yne and 3,5-dimethyl-3-hexen-1-yne; tetramethyltetrahexenylcyclotetrasiloxane, and benzotriazole.

In a further embodiment of the invention there is provided an apparatus suitable for use in the integrated process in accordance with any one of claims described above. The apparatus comprises a high-shear mixer, a bulk solids cooling device and a massing apparatus, said mixer having a plurality of inlets, an outlet, a motor and one or more high shear blades, said motor being adapted to provide rotational energy to said high shear blades contained therein, and thereby fluidise powder introduced into the mixer through one or more of said inlets, the mixer is additionally adapted to receive a high viscosity, polymer through a polymer feed port, for mixing with said fluidized powder to form a flowable powder, and a treating agent through one or more of said inlets, said bulk solids cooling device has an inlet and an outlet, the bulk solids cooling device inlet is adapted to receive flowable powder from said mixer, which powder is cooled in the cooler and subsequently transported from said bulk powder cooler exit to said massing apparatus which is adapted to mass any powder which has been cooled in said bulk solids cooling device, said apparatus being adapted to enable the introduction of one or more additives into free flowing powder prepared in mixer before, during or after cooling.

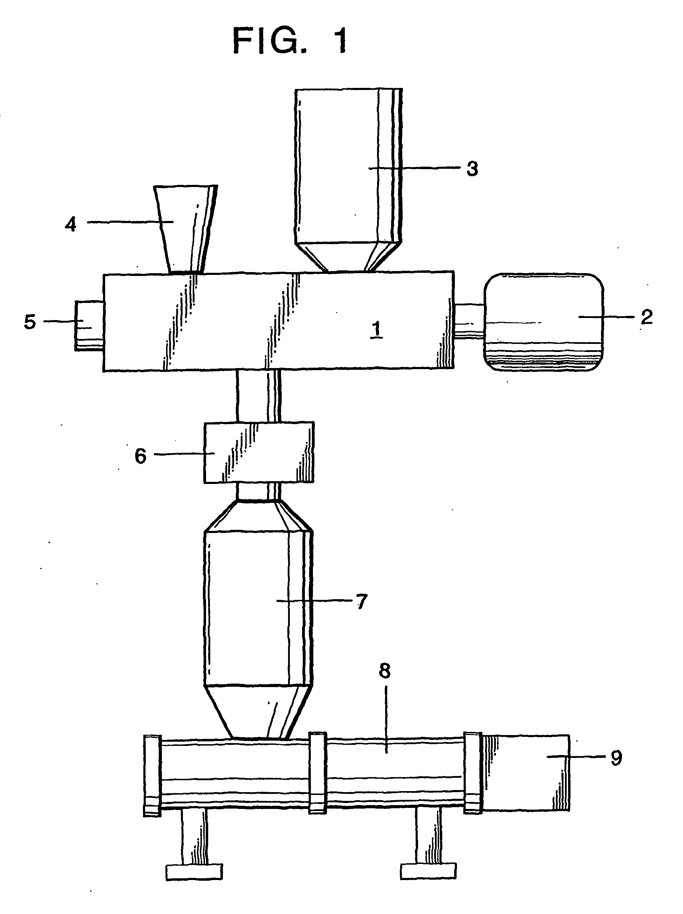

The invention will now be described by way of example and with reference to Figure 1.

Figure 1 is a schematic representation of an equipment configuration suitable for practicing the integrated process of the present invention

Referring to Figure 1 there is provided a preferred equipment configuration suitable for practising the integrated process of the present invention, in this case for manufacturing a peroxide catalyst containing silicone rubber composition in which high-shear mixer 1 has attached thereto motor 2 for providing rotational energy to high shear blades contained therein (not shown), silica hopper 3, polydimethylsiloxane feed port 4, and feed port 5 for feeding the treating agent for the silica filler and optional ingredients as described herein. In the bottom of high-shear mixer 1 is an exit port connected to powder mill 6. Powder mill 6 empties into bulk solids cooling device 7. Bulk solids cooling device 7 feeds into extruder 8 which has attached at its exit end mixer 9. In use Mixer 1 is initially heated to a temperature of above 80°C subsequent to which silica is fed into mixer 1 from hopper 3 and, when required, extending filler is introduced into mixer 1 from feed port 5 and the filler(s) is/are fluidized by means of the high shear blades driven by motor 2. After a short heating and fluidizing period the high consistency polydimethylsiloxane is introduced into mixer 1 through feed port 4 and treating agent is introduced into mixer 1 through feed port 5. After a further predetermined period of time the pressure in mixer 1 was reduced in order to extract any remaining volatile species. Once the volatile species had been drawn off the resulting powdered rubber base was passed through powder mill 6 to remove large aggregates and into bulk solids cooling device 7 in order to cool the powdered rubber base. Cooled silicone rubber base, upon exiting cooling device 7 was transferred into silicone rubber extruder 8 and the cooled silicone rubber base was massed and subsequently discharged through exit 9, with organoperoxide catalyst having been introduced therein through an entry port, (not shown) in extruder 8.

### Example

Into a Littleford Mixer such as described in Link et al., U.S. Pat. No. 3,824,208, having a mixing chamber capacity of 1200 litre and heated to 93°C, was fed 264 kg of Alumina Micral 9400 SP (J. M. Huber Corp., Edison, NJ) and 44 kg of fumed silica having a surface area of 75 m²/g Then, over about a 4 minute period, 102 kg of vinyl substituted polydimethylsiloxane gum and 52 kg of a hydroxy end-blocked polydimethylsiloxane were fed to the reactor. Next, 2.6 kg of 50 wt% zinc stearate in silicone fluid and 7.2 kg 40 wt% pigment in silicone fluid were added to the mixer. A treating agent mixture comprising 16.1 kg of a low molecular weight (LMW) hydroxy end-block polydimethylsiloxane fluid, 8.5 kg of a LMW hydroxy end-blocked phenylmethylsiloxane fluid, and 0.5 kg of a LMW hydroxy end-blocked methylvinylsiloxane fluid along with ammonium hydroxide as catalyst was added to the mixer. Mixing was continued for 11 minutes to effect treatment of the fillers, then the pressure within the mixer was reduced to 4.5 psi (80.4 kg m⁻²) to remove volatile species and mixing continued for an additional 3 minutes.

The mixer content (silicone rubber base) was discharged through a powder mill to remove large aggregates and then passed to a powder cooler such as that described in Lynch et al., U.S. Pat. No. 4,768,722. The temperature of the silicone rubber base was about 115°C exiting the mixer and in a range of 43-77°C exiting the powder cooler. The powder cooler was equipped with a vibratory discharger through which the cooled silicone rubber base was fed to an 8 inch vented cold feed silicone rubber extruder (National Feed Screw, Massilon OH). The barrel of the extruder contained 4 zones: an intake compression zone, a vacuum de-airing zone, a second compression/metering zone, and a 6-row cavity transfer mixer containing two injection ports. A peroxide catalyst was fed into the two injection ports to form a curable silicone rubber composition. The curable silicone rubber composition was passed through a 120 mesh screen positioned at the end of the extruder and package for storage and shipment. The process was operated in a semi-continuous mode by as soon as the mixer was emptied starting another batch of materials through the process. The time for running 4 such batches of material through the process was about 5 hours. Samples of each of the batches of curable silicone rubber were taken and the Williams Plasticity (mm x 100) and specific gravity were determined and are reported in Table 1. In addition, samples of each batch of the curable silicone rubber composition were cured at 177 °C and the physical properties as reported in Table 1 determined. Tensile, Modulus (100% @ elongation), and Elongation where determined by ASTM 412. Durometer (Shore A) was determined by ASTM D2240.

**Table 1 - Physical Properties of Silicone Rubber Composition Prepared by an Integrated Process**

| Run No. | | | | |
|---|---|---|---|---|
| *Property* | 1 | 2 | 3 | 4 |
| | | | | |
| Elongation (%) | 252 | 250 | 251 | 251 |
| Durometer (Shore (A) | 63 | 60 | 64 | 64 |
| Tensile (MPa) | 4.96 | 4.51 | 5.09 | 4.72 |
| Modulus (MPa) | 2.32 | 2.06 | 2.40 | 2.21 |
| Plasticity (mm x 100) | 250 | 217 | 263 | 240 |
| Spec. Gravity | 1.56 | 1.55 | 1.56 | 1.55 |

## Claims

1. An integrated process for compounding a catalyst containing silicone rubber composition comprising the steps of
A) blending a composition comprising:
i) 100 parts by weight of a high consistency polydiorganosiloxane,
ii) about 10 to 80 parts by weight of a treated or untreated reinforcing silica filler,
and when said reinforcing filler is untreated
iii) about 10 to 45 weight percent, based on the weight of the reinforcing silica filler, of a treating agent for the reinforcing silica filler
by introducing the filler into a mixer (1) and maintaining said filler in a highly turbulent, fluidized state at a temperature of from 80°C to about 350°C, maintaining the temperature and the filler in the highly turbulent fluidized state while introducing the polydiorganosiloxane and subjecting the resulting mixture to a shearing force sufficient to achieve an average particle size of from 1 to 1000 microns thereby forming a flowable organopolysiloxane powder composition, and when required, introducing said treating agent into the mixer (1) prior to, during, or after addition of the polydiorganosiloxane,
B) directly transferring the flowable organopolysiloxane powder composition to a bulk solids cooling device (7) and facilitating accelerated bulk cooling thereof to a temperature below the decomposition and/or activation temperature of a catalyst added in step (D),
C) feeding the bulk cooled flowable organopolysiloxane powder composition to a massing apparatus (8) and massing the organopolysiloxane composition therein at a temperature below the decomposition and/or activation temperature of a catalyst added in step (D),
D) adding a catalytic amount of a catalyst to the organopolysiloxane composition either prior to, during, or after step (C) at a temperature below the decomposition and/or activation temperature of the catalyst.

2. An integrated process according to Claim 1, where the high consistency polydiorganosiloxane has a viscosity within a range of about 6x10⁴ to 1x10⁸ mPa·s at 25°C.

3. An integrated process according to any preceding claim where the high consistency polydiorganosiloxane comprises one or more of trimethylsiloxy end-capped polydimethylsiloxane, vinyldimethylsiloxy end-capped polydimethylsiloxane, vinyldimethylsiloxy end-capped polydimethyl/vinylmethylsiloxane copolymer, and trimethylsiloxy end-capped polydimethyl/vinylmethylsiloxane copolymer.

4. An integrated process according to any preceding claim, where the reinforcing silica filler is a fumed silica having a surface area within a range of about 75 m²/g to 1000 m²/g.

5. An integrated process according to any preceding claim wherein the reinforcing silica filler comprises from 20 to 50 parts by weight per 100 parts by weight of the high consistency polydioganosiloxane.

6. An integrated process according to any preceding claim where the treating agent is a low molecular weight hydroxy end-blocked polydimethylsiloxane fluid.

7. An integrated process according to any preceding claim wherein the treating agent comprises about 15 to 35 weight percent, based on the weight of the reinforcing silica filler.

8. An integrated process according to any preceding claim wherein in step (A) the temperature is within a range of about 90°C to 180°C.

9. An integrated process in accordance with any preceding claim wherein the catalyst is an organoperoxide catalyst.

10. An integrated process in accordance with claim 9 wherein the organoperoxide catalyst comprises 2,4-dichlorobenzoyl peroxide and/or 2,5-bis(tertiarybutyl peroxy)-2,5-dimethylhexane.

11. An integrated process according to any preceding claim wherein the organic peroxide comprises about 0.1 to 10 weight percent, based on the weight of the composition.

12. An integrated process according any preceding claim wherein the peroxide catalyst is added in a mixing step conducted after step (C).

13. An integrated process according to any one of claims 1 to 8 wherein the catalyst is a platinum catalyst in combination with a polyorganosiloxane having at least two silicon-bonded hydrogen atoms per molecule.

14. An integrated process according any preceding claim wherein the accelerated bulk cooling of Step B is facilitated using one or more belt coolers, jacketed mixers, fluidized mixers through which cooling air may be blown, and flow-through apparatus having one or more cooling elements positioned therein (7).

15. An integrated process according any preceding claim wherein the massing apparatus (8) is an extruder.

16. An integrated process in accordance with any preceding claim wherein the flowable powder passes through a means adapted to eliminate or reduce lumps, large particles and/or agglomerates (6) prior to bulk cooling.

17. Apparatus for the integrated process in accordance with any one of claims 1 to 16 comprising a high-shear mixer (1), a bulk solids cooling device (7) and a massing apparatus (8), said mixer (1) having a plurality of inlets, an outlet, a motor (2) and one or more high shear blades, said motor (2) being adapted to provide rotational energy to said high shear blades contained therein, and thereby fluidise powder introduced into the mixer (1) through one or more of said inlets (3,5), the mixer (1) is additionally adapted to receive a high viscosity, polymer through a polymer feed port (4), for mixing with said fluidized powder to form a flowable powder, and a treating agent through one or more of said inlets (3,5), said bulk solids cooling device (7) has an inlet and an outlet, the bulk solids cooling device inlet is adapted to receive flowable powder from said mixer, which powder is cooled in the cooler and subsequently transported from said bulk powder cooler exit to said massing apparatus (8) which is adapted to mass any powder which has been cooled in said bulk solids cooling device (7), said apparatus being adapted to enable the introduction of one or more additives into free flowing powder prepared in mixer (1) before, during or after cooling.

18. Apparatus in accordance with claim 17 wherein a means adapted to eliminate or reduce lumps, large particles and/or agglomerates (6) is situated between the mixer outlet and the bulk powder cooler inlet.

19. Apparatus in accordance with claim 17 or 18 wherein the massing apparatus (8) is an extruder.

## Patentansprüche

1. Ein integriertes Verfahren zum Herstellen einer Mischung einer einen Katalysator enthaltenden Silikonkautschukzusammensetzung, das die folgenden Schritte beinhaltet:
A) Anmischen einer Zusammensetzung, die Folgendes beinhaltet:
i) 100 Gewichtsteile eines Polydiorganosiloxans hoher Konsistenz,
ii) etwa 10 bis 80 Gewichtsteile eines behandelten oder nicht behandelten Verstärkerfüllstoffs aus Siliciumdioxid,
und wenn der Verstärkerfüllstoff nicht behandelt ist
iii) etwa 10 bis 45 Gewichtsprozent, basierend auf dem Gewicht des Verstärkerfüllstoffs aus Siliciumdioxid, eines Behandlungsmittels für den Verstärkerfüllstoff aus Siliciumdioxid
durch das Einführen des Füllstoffs in einen Mischer (1) und Halten des Füllstoffs in einem hochturbulenten, fluidisierten Zustand bei einer Temperatur von 80 °C bis etwa 350 °C, Halten der Temperatur und des Füllstoffs in dem hochturbulenten, fluidisierten Zustand während des Einführens des Polydiorganosiloxans und Aussetzen des resultierenden Gemisches gegenüber einer Scherkraft, die ausreichend ist, um eine durchschnittliche Partikelgröße von 1 bis 1000 Mikrometer zu erreichen, wodurch eine fließfähige Organopolysiloxanpulverzusammensetzung gebildet wird, und, falls erforderlich, Einführen des Behandlungsmittels in den Mischer (1) vor, während oder nach der Zugabe des Polydiorganosiloxans,
B) direktes Übertragen der fließfähigen
Organopolysiloxanpulverzusammensetzung an eine Schüttkühlungseinrichtung (7) und Erleichtern der beschleunigten losen Kühlung davon auf eine Temperatur unterhalb der Zersetzungs- und/oder Aktivierungstemperatur eines in Schritt (D) hinzugefügten Katalysators,
C) Einspeisen der lose gekühlten fließfähigen
Organopolysiloxanpulverzusammensetzung in eine Ballungsvorrichtung (8) und Zusammenballen der Organopolysiloxanzusammensetzung darin bei einer Temperatur unterhalb der Zersetzungs- und/oder Aktivierungstemperatur eines in Schritt (D) hinzugefügten Katalysators,
D) Hinzufügen einer katalytischen Menge eines Katalysators zu der Organopolysiloxanzusammensetzung entweder vor, während oder nach Schritt (C) bei einer Temperatur unterhalb der Zersetzungs- und/oder Aktivierungstemperatur des Katalysators.

2. Integriertes Verfahren gemäß Anspruch 1, wobei das Polydiorganosiloxan hoher Konsistenz bei 25 °C eine Viskosität innerhalb eines Bereichs von etwa 6 x 10⁴ bis 1x10⁸ mPa·s aufweist.

3. Integriertes Verfahren gemäß einem der vorhergehenden Ansprüche, wobei das Polydiorganosiloxan hoher Konsistenz eines oder mehrere von Polydimethylsiloxan mit Trimethylsiloxy-Endkappe, Polydimethylsiloxan mit Vinyldimethylsiloxy-Endkappe, Polydimethyl/vinylmethylsiloxancopolymer mit Vinyldimethylsiloxy-Endkappe und Polydimethyl/vinylmethylsiloxancopolymer mit Trimethylsiloxy-Endkappe beinhaltet.

4. Integriertes Verfahren gemäß einem der vorhergehenden Ansprüche, wobei der Verstärkerfüllstoff aus Siliciumdioxid ein pyrogenes Siliciumdioxid mit einem Oberflächenbereich innerhalb eines Bereichs von etwa 75 m²/g bis 1000 m²/g ist.

5. Integriertes Verfahren gemäß einem der vorhergehenden Ansprüche, wobei der Verstärkerfüllstoff aus Siliciumdioxid von 20 bis 50 Gewichtsteile pro 100 Gewichtsteile des Polydiorganosiloxans hoher Konsistenz beinhaltet.

6. Integriertes Verfahren gemäß einem der vorhergehenden Ansprüche, wobei das Behandlungsmittel ein Polydimethylsiloxanfluid von niedrigem Molekulargewicht mit Hydroxy-Endblock ist.

7. Integriertes Verfahren gemäß einem der vorhergehenden Ansprüche, wobei die Menge an Behandlungsmittel etwa 15 bis 35 Gewichtsprozent, basierend auf dem Gewicht des Verstärkerfüllstoffs aus Siliciumdioxid, beinhaltet.

8. Integriertes Verfahren gemäß einem der vorhergehenden Ansprüche, wobei sich in Schritt (A) die Temperatur innerhalb eines Bereichs von etwa 90 °C bis 180 °C befindet.

9. Integriertes Verfahren gemäß einem der vorhergehenden Ansprüche, wobei der Katalysator ein Organoperoxidkatalysator ist.

10. Integriertes Verfahren gemäß Anspruch 9, wobei der Organoperoxidkatalysator 2,4-Dichlorbenzoylperoxid und/oder 2,5-Bis(tertiärbutylperoxy)-2,5-dimethylhexan beinhaltet.

11. Integriertes Verfahren gemäß einem der vorhergehenden Ansprüche, wobei die Menge an organischem Peroxid etwa 0,1 bis 10 Gewichtsprozent, basierend auf dem Gewicht der Zusammensetzung, beinhaltet.

12. Integriertes Verfahren gemäß einem der vorhergehenden Ansprüche, wobei der Peroxidkatalysator in einem nach Schritt (C) ausgeführten Mischschritt hinzugefügt wird.

13. Integriertes Verfahren gemäß einem der Ansprüche 1 bis 8, wobei der Katalysator ein Platinkatalysator in Kombination mit einem Polyorganosiloxan mit mindestens zwei siliziumgebundenen Wasserstoffatomen pro Molekül ist.

14. Integriertes Verfahren gemäß einem der vorhergehenden Ansprüche, wobei die beschleunigte lose Kühlung aus Schritt B unter Verwendung von einem oder mehreren Bandkühlern, Doppelmantelmischern, Wirbelmischern, durch die kalte Luft geblasen werden kann, und Durchflussvorrichtungen, die darin positioniert ein oder mehrere Kühlelemente aufweisen (7), erleichtert wird.

15. Integriertes Verfahren gemäß einem der vorhergehenden Ansprüche, wobei die Ballungsvorrichtung (8) ein Extruder ist.

16. Integriertes Verfahren gemäß einem der vorhergehenden Ansprüche, wobei das fließfähige Pulver durch ein Mittel läuft, das angepasst ist, um Klumpen, große Partikel und/oder Agglomerate (6) vor der losen Kühlung zu eliminieren oder zu reduzieren.

17. Eine Vorrichtung für das integrierte Verfahren gemäß einem der Ansprüche 1 bis 16, die einen Hochscherungsmischer (1), eine Schüttkühlungseinrichtung (7) und eine Ballungsvorrichtung (8) beinhaltet, wobei der Mischer (1) eine Vielzahl von Einlässen, einen Auslass, einen Motor (2) und eine oder mehrere Hochscherungsblätter aufweist, wobei der Motor (2) angepasst ist, um Drehenergie für die darin enthaltenen Hochscherungsblätter bereitzustellen, und dadurch Pulver zu fluidisieren, das durch einen oder mehrere der Einlässe (3, 5) in den Mischer (1) eingeführt wird, wobei der Mischer (1) zusätzlich angepasst ist, um ein Polymer hoher Viskosität durch eine Polymereinspeiseöffnung (4) zum Mischen mit dem fluidisierten Pulver, um ein fließfähiges Pulver zu bilden, und ein Behandlungsmittel durch einen oder mehrere der Einlässe (3, 5) aufzunehmen, wobei die Schüttkühlungseinrichtung (7) einen Einlass und einen Auslass aufweist, wobei der Einlass der Schüttkühlungseinrichtung angepasst ist, um fließfähiges Pulver von dem Mischer aufzunehmen, wobei das Pulver in dem Kühler gekühlt wird und nachfolgend von dem Ausgang des Schüttpulverkühlers zu der Ballungsvorrichtung (8) transportiert wird, die angepasst ist, um jedwedes Pulver, das in der Schüttkühlungsvorrichtung (7) gekühlt worden ist, zusammenzuballen, wobei die Vorrichtung angepasst ist, um die Einführung von einem oder mehreren Zusatzstoffen in frei fließendes Pulver, das in dem Mischer (1) zubereitet wird, vor, während oder nach dem Kühlen zu ermöglichen.

18. Vorrichtung gemäß Anspruch 17, wobei ein Mittel, das angepasst ist, um Klumpen, große Partikel und/oder Agglomerate (6) zu eliminieren oder zu reduzieren, zwischen dem Mischerauslass und dem Schüttpulverkühlereinlass gelegen ist.

19. Vorrichtung gemäß Anspruch 17 oder 18, wobei die Ballungsvorrichtung (8) ein Extruder ist.

## Revendications

1. Un procédé intégré pour élaborer une composition de caoutchouc de silicone contenant un catalyseur comprenant les étapes consistant à
A) homogénéiser une composition comprenant :
i) 100 parties en poids d'un polydiorganosiloxane à haute consistance
ii) environ 10 à 80 parties en poids d'une charge de silice renforçante traitée ou non traitée,
et lorsque ladite charge renforçante n'est pas traitée
iii) environ 10 à 45 pour cent en poids, rapporté au poids de la charge de silice renforçante, d'un agent de traitement pour la charge de silice renforçante
en introduisant la charge dans un mélangeur (1) et en maintenant ladite charge dans un état fluidisé hautement turbulent à une température allant de 80 °C à environ 350 °C, en maintenant la température et la charge dans l'état fluidisé hautement turbulent tout en introduisant le polydiorganosiloxane et en soumettant le mélange résultant à une force de cisaillement suffisante pour obtenir une taille de particule moyenne allant de 1 à 1 000 microns, formant de ce fait une composition de poudre d'organopolysiloxane s'écoulant librement, et lorsque requis, en introduisant ledit agent de traitement dans le mélangeur (1) avant, pendant, ou après l'ajout du polydiorganosiloxane,
B) transférer directement la composition en poudre d'organopolysiloxane fluide dans un dispositif de refroidissement de solides en masse (7) et faciliter le refroidissement en masse accéléré de celle-ci à une température en dessous de la température de décomposition et / ou d'activation d'un catalyseur ajouté à l'étape (D),
C) amener la composition en poudre d'organopolysiloxane s'écoulant librement refroidie en masse dans un appareil de malaxage (8) et y malaxer la composition d'organopolysiloxane à une température en dessous de la température de décomposition et / ou d'activation d'un catalyseur ajouté à l'étape (D),
D) ajouter une quantité catalytique d'un catalyseur à la composition d'organopolysiloxane soit avant, soit durant, soit après l'étape (C) à une température en dessous de la température de décomposition et / ou d'activation du catalyseur.

2. Un procédé intégré selon la revendication 1, où le polydiorganosiloxane à haute consistance présente une viscosité comprise dans une gamme allant d'environ 6 x 10⁴ à 1 x 10⁸ mPa·s à 25 °C.

3. Un procédé intégré selon n'importe quelle revendication précédente où le polydiorganosiloxane à haute consistance comprend un ou plusieurs éléments parmi le polydiméthylsiloxane coiffé aux extrémités par du triméthylsiloxy, le polydiméthylsiloxane coiffé aux extrémités par du vinyldiméthylsiloxy, le copolymère polydiméthyl/vinylméthylsiloxane coiffé aux extrémités par du vinyldiméthylsiloxy, et le copolymère polydiméthyl/vinylméthylsiloxane coiffé aux extrémités par du triméthylsiloxy.

4. Un procédé intégré selon n'importe quelle revendication précédente, où la charge de silice renforçante est une silice fumée présentant une superficie comprise dans une gamme allant d'environ 75 m²/g à 1 000 m²/g.

5. Un procédé intégré selon n'importe quelle revendication précédente dans lequel la charge de silice renforçante constitue de 20 à 50 parties en poids pour 100 parties en poids du polydiorganosiloxane à haute consistance.

6. Un procédé intégré selon n'importe quelle revendication précédente où l'agent de traitement est un fluide de polydiméthylsiloxane bloqué aux extrémités par un hydroxy de faible poids moléculaire.

7. Un procédé intégré selon n'importe quelle revendication précédente dans lequel la quantité d'agent de traitement constitue environ 15 à 35 pour cent en poids, rapporté au poids de la charge de silice renforçante.

8. Un procédé intégré selon n'importe quelle revendication précédente dans lequel, à l'étape (A), la température est comprise dans une gamme allant d'environ 90 °C à 180 °C.

9. Un procédé intégré conformément à n'importe quelle revendication précédente dans lequel le catalyseur est un catalyseur organoperoxyde.

10. Un procédé intégré conformément à la revendication 9 dans lequel le catalyseur organoperoxyde comprend du peroxyde de 2,4-dichlorobenzoyle et / ou du 2,5-bis(peroxy butylique tertiaire)-2,5-diméthylhexane.

11. Un procédé intégré selon n'importe quelle revendication précédente dans lequel la quantité de peroxyde organique constitue environ 0,1 à 10 pour cent en poids, rapporté au poids de la composition.

12. Un procédé intégré selon n'importe quelle revendication précédente dans lequel le catalyseur peroxyde est ajouté dans une étape de mélangeage menée après l'étape (C).

13. Un procédé intégré selon l'une quelconque des revendications 1 à 8 dans lequel le catalyseur est un catalyseur platine combiné à un polyorganosiloxane ayant au moins deux atomes d'hydrogène liés à du silicium par molécule.

14. Un procédé intégré selon n'importe quelle revendication précédente dans lequel le refroidissement en masse accéléré de l'étape B est facilité par l'utilisation d'un ou de plusieurs refroidisseurs à courroie, mélangeurs à chemise, mélangeurs fluidisés au travers desquels de l'air refroidissant peut être soufflé, et appareils à écoulement continu dans lesquels sont positionnés un ou plusieurs éléments de refroidissement (7).

15. Un procédé intégré selon n'importe quelle revendication précédente dans lequel l'appareil de malaxage (8) est une extrudeuse.

16. Un procédé intégré conformément à n'importe quelle revendication précédente dans lequel la poudre s'écoulant librement passe à travers un moyen conçu pour éliminer ou réduire des grumeaux, de grandes particules et / ou des agglomérats (6) avant le refroidissement en masse.

17. Appareil pour le procédé intégré conformément à l'une quelconque des revendications 1 à 16 comprenant un mélangeur à cisaillement élevé (1), un dispositif de refroidissement de solides en masse (7) et un appareil de malaxage (8), ledit mélangeur (1) ayant une pluralité d'entrées, une sortie, un moteur (2) et une ou plusieurs lames à cisaillement élevé, ledit moteur (2) étant conçu pour fournir une énergie de rotation auxdites lames à cisaillement élevé contenues dans celui-ci, et de ce fait fluidiser de la poudre introduite dans le mélangeur (1) par une ou plusieurs desdites entrées (3, 5), le mélangeur (1) est de plus conçu pour recevoir un polymère à viscosité élevée par un orifice d'amenée de polymère (4) pour le mélanger avec ladite poudre fluidisée afin de former une poudre s'écoulant librement, et un agent de traitement par une ou plusieurs desdites entrées (3, 5), ledit dispositif de refroidissement de solides en masse (7) a une entrée et une sortie, l'entrée du dispositif de refroidissement de solides en masse est conçue pour recevoir une poudre fluide dudit mélangeur, laquelle poudre est refroidie dans le refroidisseur et transportée par la suite de ladite issue du refroidisseur de poudre en masse audit appareil de malaxage (8) qui est conçu pour malaxer toute poudre qui a été refroidie dans ledit dispositif de refroidissement de solides en masse (7), ledit appareil étant conçu pour permettre l'introduction d'un ou de plusieurs additifs dans la poudre à écoulement libre préparée dans le mélangeur (1) avant, pendant ou après le refroidissement.

18. Appareil conformément à la revendication 17 dans lequel un moyen conçu pour éliminer ou réduire des grumeaux, de larges particules et / ou des agglomérats (6) est situé entre la sortie du mélangeur et l'entrée du refroidisseur de poudre en masse.

19. Appareil conformément à la revendication 17 ou la revendication 18 dans lequel l'appareil de malaxage (8) est une extrudeuse.
